# EUROPEAN PATENT SPECIFICATION

(11) **EP 2 538 192 B1**
(45) Date of publication and mention of the grant of the patent: **08.05.2019**
(21) Application number: 11425169.7
(22) Date of filing: 01.07.2011
(51) Int. Cl.: G01M 3/16, G01M 3/18, G01N 22/02

(54) **Apparatus and method for detection and localization of leaks in underground pipes**
Vorrichtung und Verfahren zur Detektion und Ortung von Lecks in unterirdischen Rohren
Appareil et procédé pour la détection et la localisation de fuites dans des canalisations souterraines

(30) Priority: 23.06.2011 IT BA20110034
(43) Date of publication of application: 26.12.2012
(73) Proprietor: Monitech SRL Monitoring Technologies, 73100 Lecce (IT)
(72) Inventor: Cataldo, Andrea Maria, 73100 Lecce (IT); Cannazza, Giuseppe, 73042 Casarano (IT); De Benedetto, Egidio, 73039 Tricase (IT)
(74) Representative: Bruni, Giovanni

(56) References cited:
- EP-A1- 0 527 404
- EP-A1- 0 580 903
- EP-A1- 2 065 681
- EP-A2- 0 298 479
- WO-A1-97/14943
- WO-A2-02/10709
- WO-A2-2008/066904
- GB-A- 2 462 078
- US-A- 3 981 181
- US-A- 5 134 377
- US-A1- 2001 030 543
- US-A1- 2010 171 483

## Description

The present invention generally relates to an apparatus and to the relevant methodology for the individuation of leaks in fluid pipelines, and more particularly to a microwave reflectometry-based system for detecting faults and leaks in water pipelines.

The individuation of leaks in water pipelines (and, more in general, in fluid pipelines) is extremely important: in fact, not only does the efficient and effective localization of leaks have beneficial effects on several contexts, but it also provides many practical advantages in terms of optimization and rationalization of water resources and of water distribution systems. Indeed, in most water distribution systems, a fairly sizable amount of water is lost because of leaks and faults in pipes, inaccurate water meters, usage for public purposes (such as fire fighting or cleaning of water pipes), theft, etc. However, faults, leaks or fractures in pipes represent the major causes of water loss.

It is also well known that, at the state of the art, leakage control programmes typically involve two major steps: water audits (estimation of the water flow into and out of the whole distribution system or into and out of a specific district) and leak detection surveys, which aim at the detailed localization of the leak. Currently, leak detection surveys are usually carried out through electro-acoustic techniques. In these surveys, for carrying out a preliminary "listening campaign", typically, the technical staff employs specific "listening devices", which must be put in contact with the pipeline through the accessible points of the water distribution system (i.e., valves, manholes or fire hydrants). In this way, it is possible to obtain a rough idea of the possible presence of leaks (or faults) and of their location. Successively, leaks should be accurately pinpointed by listening for leak sounds on the ground directly above the pipe. An example that falls into this category may be the US patent US5287884, which relates to a water flow monitoring system for determining the presence of leaks in plumbing pipes having water flowing through the pipes under high pressure; such a system, which aims at individuating leaks, is equipped with several measurement instruments (positioned at the beginning and at the end of the pipe to be monitored), with several sensors (e.g., microphones with amplifier), and with a control system.

The acoustic listening devices that are typically employed can be either of the mechanical or electronic type (e.g., listening rods, geophones or microphones). These devices resort to sensing mechanisms or to sensing elements (like piezoelectric materials, in order to detect the sound or vibration induced by water leaks. Modern electronic listening devices also include signal amplifiers and noise filters, for enhancing the quality of the measured signals.

Leak noise correlators, which are also electro-acoustic devices, are more sophisticated than the aforementioned devices; in fact, they include onboard microprocessors that allow automatic data acquisition and processing. A noise correlator attempts to detect the sound of the leak at two points that bracket the suspected leak (typically individuated through a preliminary survey), by employing vibration sensors (or, alternatively, hydrophones) attached to two contact points with the considered pipe. The detected signals are transmitted wirelessly from the sensors to the correlator and, because the leak is not necessarily at the midpoint between the two sensors, there will be a time lag (caused by the very presence of the leak). Said time lag is evaluated by applying the cross-correlation function, which should present a significant peak in correspondence of the point where the leak is. A similar technique for leak detection is described in the US patent US5038614, which describes a leak detection method, based on the analysis of axial and torsional vibrations and of the pressure fluctuations (created by such events) which are sensed by placing accelerometers and/or strain gauges and pressure sensors at selected points on the pipe. The location of the leak is determined by carrying out cross correlation and deconvolution processes for estimating the difference of the acoustic wave speed of axial versus torsional waves.

Similarly, the European patent request EP0831316 describes a noise correlator apparatus for the localization of leaks in pipes.

Additional state-of-the-art methods for water leak detection include non-acoustic techniques, such as the tracer gas technique, the infrared imaging, and the ground penetrating radar (GPR).

To summarize, the applications based on electro-acoustic techniques (which, as aforementioned, are the most widespread) have some disadvantages. First of all, for the listening devices that are typically employed (e.g., geophones or microphones), independently of their typology (mechanical or electronic), despite their relative easiness of use, the efficiency in detecting leaks is strongly dependent on the experience of the operator. Indeed, the efficiency of the methods themselves is influenced by several factors, such as dimensions, material and depth of the pipe; type of soil; water pressure, sensitivity; frequency range of the instrumentation; etc.. As a matter of fact, the applicability and the detection efficiency of said listening devices are strongly limited to specific operating conditions of the pipe; in particular, the pressure must be sufficiently high (at least 2-3 bars). Also, the use of the aforementioned listening devices is often characterized by errors in the localization of the leaks, and high uncertainties in the position of the leak; finally, measurements require an excessively long time (which, clearly, ends up increasing the costs of the personnel). Some instruments, such as those that resort to the correlation methods, are characterized by high implementation costs and high operational costs. Additionally, by employing the state-of-the-art techniques, it is not possible to carry out continuous and remotely-controlled monitoring,, which would allow to systematically check the "health" of the infrastructure. Moreover, the state-of-the-art techniques are not well-suited for individuating leaks in plastic pipes. Finally, there are additional practical problems related to the aforementioned techniques, such as the fact that the material and the diameter of the pipes have considerable influence on the attenuation of the leak signals. In fact, a large diameter of the pipe causes a stronger attenuation of the leak signal, thus making it more difficult to individuate the leak; the strength of the leak signal is also deeply influenced by the type of soil; the sounds due to the leaks change considerably depending on the type of the leak and on its dimension (cracks, corrosion pits, etc.).

As an additional final note, with regards to the other aforementioned techniques (termography, tracer gas method, and GPR), because of their intrinsic difficulty to use, high costs involved and the need of highly-qualified personnel, they are employed rarely and only in specific cases.

Other examples of applications inherent to microwave reflectometry-based monitoring methodologies are the following: in document GB2462078 the possible configurations that may have a system (comprised of a plurality of point sensors/actuators distributed along the pipe) for the individuation of cracks or structural faults (corrosion, deformation, etc.) on pipes to be used for underwater applications; in document WO2008/066904 a system and a method for the individuation of anomalies (e.g.. points of corrosion) on the inner surface of hollow elongated structures (and, therefore, also of pipes), resorting to time domain reflectometry and frequency domain reflectometry, are described; in document WO 02/10709 a system, based on the propagation of an electromagnetic signal along the pipe, for the individuation of anomalies (obstructions, rust, inadequate soldering, deformation) in pipes; in EP 2065681 it is described a system for the detection of variations of chemico-physical properties of materials through a reflectometric technique wherein the material whose characteristics are to be monitored must embed within its structure some sensing elements that must be sensitive to the changes of the property to be monitored and that must vary their electric characteristics as a function of the changes that occur in the material in which they are embedded; document WO 97/14943 described a system for the individuation of gas bubble movements inside conducts that carry refrigerating liquid (the bubbles are an indicators of the fact the liquid is leaking into the atmosphere) through a transmitter that send a microwave signal towards a transparent-to-microwaves glass conduct and a receiver acquires the reflected signal.

With regards to microwave reflectometry-based leak-detection system, instead, there are the following systems: in document US 3981181, a pair of metallic cables or a coaxial cable (specifically designed and manufactured, and equipped with a dielectric material porous to the liquid whose leaks must be monitored) are placed in proximity of the pipe or of the container whose leaks must be monitored; in document EP 0298479 a time domain reflectometry based system for leak detection in which an electric cable is placed in proximity of the pipe to be monitored and the presence of a leak is individuated as a local variation of the electrical impedance of the cable, provoked by the liquid when it permeates the porous material embedded in the electric cable; in document US 5134377 an instrument for time domain reflectometry measurements is described, this instrument is intended for water-leak detection and must employ a cable embedded with a porous material that must absorb and retain the liquid that exits from the pipe, the corresponding electrical impedance variation is then measured through the described instrument; document EP 0580903 describes a "pipe within a pipe" leak detection system, in which the sensing element is constituted by a cable rolled out along the pipe and embedded inside a porous material that retains the liquid that leaks from the pipe, the pipe must be specifically manufactured to house the sensing element; finally, document US 2010/171483 describes a system for detecting anomalies (e.g. corrosion) in metallic pipes, the pipes must be enclosed inside a dielectric material which, in turn, must be enclosed in another metallic pipe.

With regards to the aforementioned applications, some of them (GB2462078, WO2008/066904, WO 02/10709, EP 2065681, WO 97/14943, EP 0527404) are substantially different from the object of the invention that will be described later in the present document; on the other hand, the remaining applications (US 3981181, EP 0298479, US 5134377, EP 0580903, US 2010/171483) exhibit the evident drawback that they require the design and manufacturing of specific ad-hoc sensing elements (for detecting the pipe leak), namely equipped with a porous material that must absorb and retain the liquid leak from the pipe. The present invention, instead, relates to the development of an alternative leak detection technique, based on microwave reflectometry, able to overcome the aforementioned application limits, and able to quickly and effectively individuate leaks also in hundreds-of-meters-long underground pipes.

Therefore, it is an object of the present invention to provide an apparatus according to claim 2 and the relevant methodology according to claim 1, both employing microwave reflectometry technique, for quickly and effectively detecting and localizing leaks of water (and of fluids in general) in underground pipes.

These and other features and attendant advantages of the present invention will be described in further detail also through the illustration of some non-limiting preferred embodiments of the invention, with reference to the accompanying drawings, wherein:
- fig. 1 is a simplified, schematic view of one preferred embodiment of the invention intended for existing (i.e., already installed and in use) underground metal pipes;
- fig. 2 shows the detail view of the components, relevant to the diagram shown in fig. 1, and of their interconnection methods,
- fig. 3 shows an example of a typical measurement result obtained in presence of a water leak in a metal pipe when the apparatus depicted in fig. 1 and a steel cable (with a circular cross-section that has a diameter of 5 mm) used as sensing
   element are employed for the individuation of the leak; Reflectometric technique, operating in the time domain (TDR) or dually in the frequency domain (FDR), and, in particular, microwave reflectometry (i.e., a reflectometry technique that relies on the use of microwave electromagnetic signals) is largely used for diagnostic and monitoring purposes, thanks to its high measurement accuracy, high versatility, and robustness; thanks to the relatively low implementation costs; and thanks to the possibility of carrying out continuous, automated, remotely-controllable, real-time measurements. Such methodologies are widely used for dielectric and spectroscopic characterizations; for impedenziometric measurements; for fault diagnosis; and also for qualitative, quantitative and/or structural controls on several kinds of materials, devices and components.

The basic principle behind this measurement method lies in propagating an appropriate electromagnetic signal (typically, a voltage step signal with very short rise-time), along a transmission line, through the system under test. From the corresponding reflected signal, it is possible to obtain the electrical impedance profile of the system under test, and hence the intrinsic (qualitative and quantitative) characteristics of said system under test. In fact, the variations of dielectric permittivity, which is directly related to the electrical impedance, can be effectively detected through the reflectometry-based techniques. Reflectometry is particularly useful for moisture content measurements; in fact, water exhibits a high value of relative dielectric permittivity (approximately equal to 80), and, therefore, the presence of water in a medium, such as the soil, can be easily detected and measured. Typically, such traditional applications of microwave reflectometry rely on the use of suitable metallic measurement probes (generally, the probes have a coaxial, a bifilar or a trifilar configuration), which are connected through appropriate connections to the reflectometric unit and allow the signal to propagate through the system under test, thus also allowing the analysis of the reflected signal.

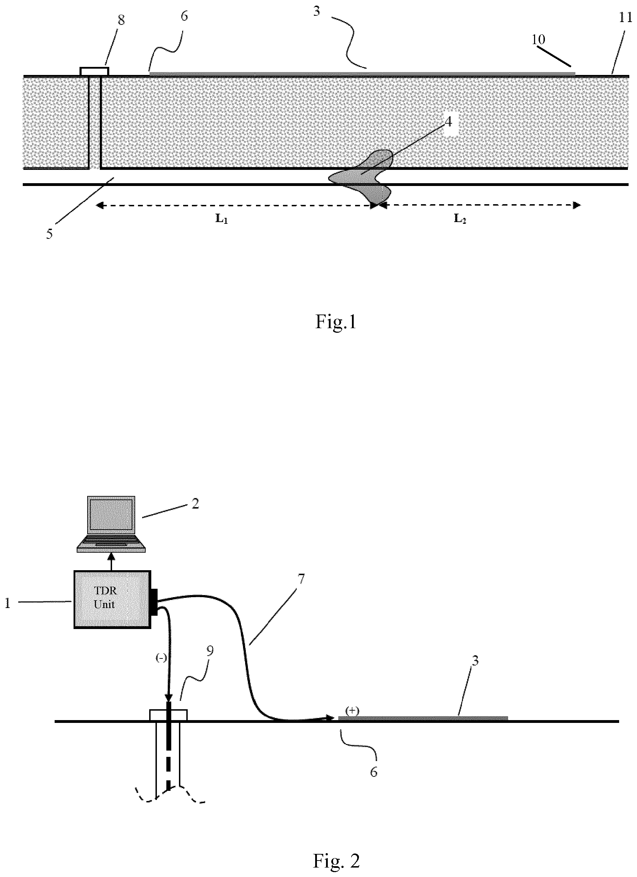

By exploiting the aforementioned principles of such a diagnostic methodology, it is an object of the present invention to provide a system, able to work in different configurations, for the localization of leaks, faults or malfunctions in underground pipes. In one non-limiting preferred embodiment of the invention, it is possible to implement a configuration of the apparatus for the non-invasive detection and localization of leaks in existing (i.e., already installed and in use) underground metallic pipes. This last category includes the vast majority of the water pipes that are currently installed in the water distribution system. As can be seen from fig. 1 and from fig. 2, in this case, the layout of the leak-detection apparatus comprises two main sections: one section includes the electronic instrumentation, the acquisition and data-processing tools, the system management software (with possibility of automating measurements, of remote data acquisition, and of data transmission); whereas the other section includes the sensing elements and the accessories needed for the connections. Fig. 2 shows a detail view of the components that can be used and of the corresponding connection methods. With continued reference to fig. 1 and to fig. 2, for the case of leak-detection in water pipes that are already installed, the main components that constitute the apparatus of the present invention are a reflectometric unit 1; an electronic calculator 2 which provides interface with the reflectometric unit 1; a sensing element 3 (made of electrically conductive material) that is to be placed on the road surface 11 (e.g., pavement) in correspondence of the underground metal pipe 5 and that has to be connected to the reflectometric unit 1 through an appropriate connection 6 which, in turn, may be realized through a length of coaxial cable 7 (whose positive is connected to the reflectometric unit 1) and another electrical-connection element 9 (e.g., a length of unipolar cable terminated with an alligator clip) which connects the reference ground of the reflectometric unit 1 to the metal pipe 5 through the point of access 8 to the pipe, thus guaranteeing electrical continuity; several accessories, connectors and connecting cables and wires. With reference to the reflectometric unit 1, considering the specific application, it is preferable to use a compact, portable instrument, able to be battery-powered and able to generate the incident signal and to digitize, acquire and display the measurement data. However, this component can be replaced by an oscilloscope to be used in conjunction with an appropriate signal generator. The sensing element 3 can be a metallic cable or metallic tape of suitable length; said sensing element can be anchored to the road surface 11 and can also be realized as a series of modules of different length. On the other hand, connection 6 is constituted by a length of coaxial cable with impedance matched to the impedance of the unit 1 (typically, 50 ohms). Finally, the electrical connection 9 can be made between the ground reference of unit 1 and the point of access 8 to the pipe 5.

The electrical continuity between 9 and 5 can be preliminarily verified through a multimeter; in case the electrical continuity condition is not guaranteed, it is necessary to abrade the metal element that provides access to the underground pipe.

The operating principle of the system for the detection and localization of leaks can be deduced from fig. 1 and fig. 2: by employing the procedure described above, the reflectometric signal propagates through the sensing element 3 and through the pipe 5 (it must be pointed out that the polarity of the two electrodes can also be inverted). The possible presence of water associated to a leak (indicated as 4), located at a distance L₁ from the measurement point and at a distance L₂ from the open-circuited termination 10 of element 3, causes a significant variation of the measured reflectometric signal (typically associated to the presence of a relative maximum or a relative minimum of the amplitude of said reflectometric signal). On the other hand, the termination of element 3 causes the typical reflectometric signal of an open circuit (i.e., the reflection coefficient tends to the value +1), which is useful for individuating the final point of the length of pipe under test; said final point is at a distance L₁ + L₂ from the measurement point.

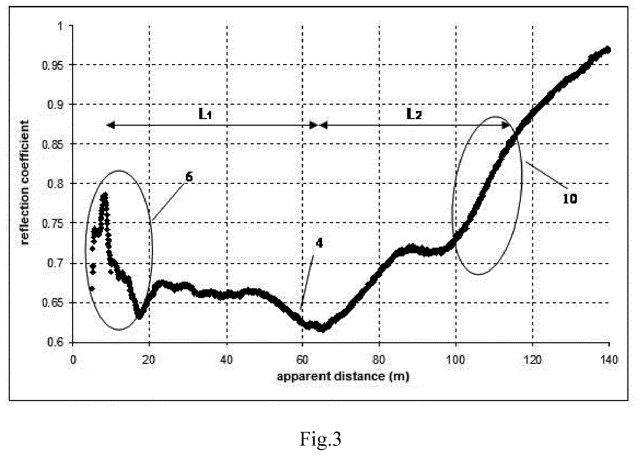

The reflectometric signal is displayed as a function of time or, equivalently, as a function of the apparent distance, which largely depends on the dielectric characteristics of the soil between the pipe and the sensing element. Therefore, by comparing the known distance L₁ + L₂ with the measured apparent distance, the location of the leak can be easily evaluated, as shown in fig.3. This figure shows the detection of a water leak that was actually individuated through the sensing element 3 (a 60 m-long metallic cable with circular cross-section), positioned at a distance L₁ (equal to 27 m and corresponding to an apparent distance of approximately 60 m) from the measurement point. With continued reference to the curve (fig. 3) obtained through the apparatus that is the object of the present invention, it is possible to individuate different "regions" of the curve: the leftmost region refers to the spurious reflections caused by the connection to the pipe 6; the central region of the curve shows the significant variation of the reflectometric signal that is associated to the presence of the leak (in this specific case, the curve shows a relative minimum); and, finally, the rightmost region of the curve shows the typical behaviour of the open-circuited termination of element 3 (the reflection coefficient tends towards +1).

A more accurate individuation of the point where the significant reflections occur can be obtained through the analysis of the derivative of the reflectometric signal and through the implementation of suitable (possibly, automatable) time/frequency digital filters, which are intended to facilitate the individuation of the "peaks" that correspond to the significant reflection, thus also facilitating the interpretation of the measurement data.

Furthermore, the presence of a length of coaxial cable 7 (typically, a few meters long) serves a twofold purpose: firstly, through the use of common BNC, N or SMA connectors, the coaxial cable 7 allows connecting the unit 1 to the sensing element 3, to which only one pole is connected (either the negative or the positive pole); secondly, the coaxial cable 7 strongly reduces the effect of the parasitic reflections caused by the large impedance mismatches that are introduced by the connection to the pipe at point 9 and by the vertical portion of line that allows access to the pipe. Such connection methods, however, cause the presence of "peaks of spurious reflections" (as shown in fig.3), which are due to the transition from the coaxial cable to the bifilar line that element 3 forms with the pipe 5 itself. The effect of said abrupt transition, which can however be taken into account (or compensated for) by comparing the acquired signal with the one corresponding to a reference standard condition, does not compromise the overall performance of the system, and it is useful for facilitating the localization of point 6 (corresponding to the beginning of element 3), which is a necessary action for accurately calibrating the apparent distances of the considered portion of pipe.

For the described preferred embodiment of the present invention, it is important to underline some important aspects. If nor leaks nor faults are present, the amplitude of the acquired reflectometric signal will be practically constant all along the considered length of pipe. In this case, the acquired reflectometric signal may be considered as indicating the "optimal operating condition" of the considered pipe; in other words, in this case, the detected reflections are, practically, equal to those that would occur in "standard" operating conditions of the pipes.

If a leak or a fault is present, then by employing the apparatus and the diagnostic method that are the object of the present invention, a substantial variation of the reflectometric signal is detected (as can also be deduced from the previous considerations); such a variation is caused by the presence of water in the soil around the leak or by a generic fault or malfunction (referable, however, to a local change of electrical impedance). This portion of reflected signal intrinsically contains information that are useful for detecting and for locating the aforementioned phenomena (fig. 3). Because the measurement is performed simultaneously along the whole length of the considered pipe and because the reflectometric signal is directly associated to distances (or to travel times), possible variations of the reflectometric signal caused, for example, by the presence of a leak are intrinsically related to the distance of the leak from the measurement point; hence, said variations allow to locate the position of the leak. Additionally, from the analysis of the reflectometric signal, it is also possible to quantitatively assess the extent of the leak (in fact, the larger the amount of leaked water, the higher the amplitude of the reflected signal) or to understand the type of damage (e.g., blocked or interrupted pipes, etc.).

Furthermore, with regards to the monitoring of leaks in underground pipes that are already installed, if more than one "point of access" (8) to the considered length of water pipe is available, then the described methodology can be implemented consecutively at each point of access, so as to obtain multiple correlating measurements. The possibility of performing measurements at several points of access to the pipe can be granted also for pipes that have yet to be laid, provided that several connections to the transmission line are present.

## Claims

1. Methodology for detection and localization of leakages, in underground pipelines, based on the principle of the microwave reflectometry, through an apparatus comprising of a reflectometric unit (1), an electronic calculator (2), a sensing element (3) made of electrically conductive material placed on the road surface in correspondence of the underground metal pipe (5), accessories (9) for electrical connection between the reflectometric unit (1) and the underground pipe (5) and accessories (7) for electrical connection between the reflectometric unit (1) and the sensing element (3), said methodology **characterized by** the following steps:
(i) setting of a sensing element (3), which, together with the metal pipe (5) acts as transmission line wherein the electrical connection (6) between the sensing element (3) and the reflectometric unit (1) is realized through a coaxial cable (7) with an electrical impedance approximately equal to the output impedance of the reflectometric unit (1) and wherein the electrical connection (9) is realized through a unipolar cable to be connected between a point of access to the pipe thus allowing the electrical continuity between the pipe and the reflectometric unit (1);
(ii) sending of an electromagnetic signal from the unit (1) that propagates through a transmission line consisting of the sensing element (3) and the underground pipe (5);
(iii) detection of the reflectometric signal;
(iv) visualization and interpretation of the reflectometric signal as a function of time or, alternatively, as a function of the corresponding apparent distance which is function of dielectric properties of the soil between said underground pipe (5) and said sensing element (3), with a particular emphasis on water loss;
(v) individuation of the significant dielectric variations associated to the detected reflectometric signal (typically those corresponding to the presence of a relative maximum or minimum) with particular emphasis on water loss;
(vi) localization of the possible leakage event at a distance L₁ from the measuring point and L₂ from the terminating element (3);
(vii) calibration between the reference known distance L₁ + L₂ and the corresponding measured apparent distance for evaluating the correct spatial localization of the leak;
(viii) implementation of specific signal filtering to improve the interpretation of the reflectometric detection.

2. Apparatus for carrying out the methodology according to claim 1 comprising a reflectometric unit (1), an electronic calculator (2), a sensing element (3) made of electrically conductive material placed on the road surface in correspondence of the underground metal pipe (5), a unipolar cable (9) for electrical connection between the reflectometric unit (1) and the underground pipe (5) and a coaxial cable (7) with an electrical impedance approximately equal to the output impedance of the reflectometric unit (1) for electrical connection between the reflectometric unit (1) and the sensing element (3).

## Patentansprüche

1. Methode zur Erkennung und Lokalisierung von Leckagen in unterirdischen Rohrleitungen, die auf dem Prinzip der Mikrowellenreflektometrie basiert, durch eine Vorrichtung, die eine reflektometrische Einheit (1), einen elektronischen Rechner (2), ein Sensorelement (3) aus einem elektrisch leitendem Material, umfasst, das auf der Straßenoberfläche in Übereinstimmung mit dem unterirdischen Metallrohr (5) angeordnet ist, mit Zubehör (9) für die elektrische Verbindung zwischen der reflektometrischen Einheit (1) und dem unterirdischen Rohr (5) und dem Zubehör (7) für die elektrische Verbindung zwischen der reflektometrischen Einheit (1) und dem Sensorelement (3), wobei die genannte Methode durch folgende Schritte gekennzeichnet ist:
(i) Einstellen eines Sensorelements (3), das zusammen mit dem Metallrohr (5) als Übertragungsleitung wirkt, wobei die elektrische Verbindung (6) zwischen dem Sensorelement (3) und der reflektometrischen Einheit (1) durch ein Koaxialkabel (7) mit einer elektrischen Impedanz realisiert wird, die ungefähr gleich der Ausgangsimpedanz der reflektometrischen Einheit (1) ist, und wobei die elektrische Verbindung (9) durch ein unipolares Kabel realisiert ist, das zwischen einem Zugangspunkt zu dem Rohr derart verbunden werden soll, dass die elektrische Kontinuität zwischen das Rohr und die reflektometrische Einheit (1) gestattet wird;
(ii) Senden eines elektromagnetischen Signals von der Einheit (1), das sich durch eine aus dem Fühlerelement (3) und dem unterirdischem Rohr (5) bestehenden Übertragungsleitung, ausbreitet;
(iii) Erfassung des reflektometrischen Signals;
(iv) Visualisierung und Interpretation des reflektometrischen Signals als Funktion der Zeit oder alternativ als Funktion des entsprechenden scheinbaren Abstandes, der von den dielektrischen Eigenschaften des Bodens zwischen dem genannten unterirdischen Rohr (5) und dem genannten Sensorelement (3), mit einem besonderen Schwerpunkt auf Wasserverlust, abhängt;
(v) Erkennung der signifikanten dielektrischen Veränderungen, die dem detektierten reflektometrischen Signal (typischerweise dies entspricht dem Vorhandensein eines relativen Maximums oder Minimums), mit einem besonderen Schwerpunkt auf Wasserverlust, zugeordnet sind;
(vi) Lokalisierung des möglichen Ereignisses einer Leckage in einem Abstand L₁ vom Messpunkt und L₂ vom Endelement (3);
(vii) Kalibrierung zwischen dem bekannten Referenzabstand L₁ + L₂ und dem entsprechenden gemessenen scheinbaren Abstand, zum Auswerten der korrekten räumlichen Lokalisierung der Leckage;
(viii) Implementierung einer spezifischen Signalfilterung zur Verbesserung der Interpretation der reflektometrischen Erfassung.

2. Vorrichtung zur Durchführung des Verfahrens nach Anspruch 1, umfassend eine reflektometrische Einheit (1), einen elektronischen Rechner (2), ein Sensorelement (3) aus elektrisch leitfähigem Material, das auf der Straßenoberfläche in Übereinstimmung mit dem unterirdischen Metallrohr (5) angeordnet ist) ein unipolares Kabel (9) zur elektrischen Verbindung zwischen der reflektorischen Einheit (1) und dem unterirdischen Rohr (5) und einem Koaxialkabel (7) mit einer elektrischen Impedanz, die etwa gleich der Ausgangsimpedanz der reflektorischen Einheit (1) ist elektrische Verbindung zwischen der reflektometrischen Einheit (1) und dem Erfassungselement (3).

## Revendications

1. Méthodologie de détection et localisation des fuites dans des canalisations souterraines, sur la base du principe de la réflectométrie à micro-ondes, au moyen d'un appareil comprenant une unité de réflectométrie (1), un élaborateur électronique (2), un élément de détection (3) en matériau électriquement conducteur placé sur le revêtement routier en correspondance du tuyau métallique souterrain (5), des accessoires (9) pour la connexion électrique entre l'unité de réflectométrie (1) et le tuyau souterrain (5) et des accessoires (7) pour la connexion électrique entre l'unité de réflectométrie (1) et l'élément de détection (3), ladite méthodologie étant **caractérisée par** les étapes suivantes:
(i) réglage d'un élément de détection (3) qui, conjointement avec le tuyau métallique (5), sert de ligne de transmission dans laquelle la connexion électrique (6) entre l'élément de détection (3) et l'unité de réflectométrie (1) est réalisée au moyen d'un câble coaxial (7) avec une impédance électrique approximativement égale à l'impédance de sortie de l'unité de réflectométrie (1) et dans lequel la connexion électrique (9) est réalisée au moyen d'un câble unipolaire qui doit être connecté entre un point d'accès au tuyau, permettant ainsi la continuité électrique entre le tuyau et l'unité de réflectométrie (1);
(ii) envoi d'un signal électromagnétique de l'unité (1) qui se propage à travers une ligne de transmission constituée de l'élément de détection (3) et du tuyau souterrain (5);
(iii) détection du signal de réflectométrie;
(iv) visualisation et interprétation du signal de réflectométrie en fonction du temps ou, alternativement, en fonction de la distance apparente correspondante qui est fonction des propriétés diélectriques du terrain entre ledit tuyau souterrain (5) et ledit élément de détection (3), avec une un accent particulier sur une perte d'eau;
(v) individualisation des variations diélectriques significatives associées au signal de réflectométrie détecté (typiquement celles correspondant à la présence d'un maximum ou d'un minimum relatif) avec un accent particulier sur une perte d'eau;
(vi) localisation d'un cas de fuite éventuel à une distance L₁ du point de mesure et L₂ de l'élément terminal (3);
(vii)calibrage entre la distance de référence connue L₁ + L₂ et la distance apparente mesurée correspondante pour évaluer la localisation spatiale correcte de la fuite;
(viii) mise en oeuvre d' un filtrage de signal spécifique pour améliorer l'interprétation de la détection de réflectométrie.

2. Appareil pour la mise en oeuvre de la méthodologie selon la revendication 1, comprenant une unité de réflectométrie (1), un élaborateur électronique (2), un élément de détection (3) en un matériau électriquement conducteur placé sur le revêtement routier en correspondance du tuyau métallique souterrain (5)), un câble unipolaire (9) pour la connexion électrique entre l'unité de réflectométrie (1) et le tuyau souterrain (5) et un câble coaxial (7) avec une impédance électrique approximativement égale à l'impédance de sortie de l'unité de réflectométrie (1) pour une connexion électrique entre l'unité de réflectométrie (1) et l'élément de détection (3).
